# NEUE EUROPÄISCHE PATENTSCHRIFT

(11) **EP 1 163 834 B2**
(45) Veröffentlichungstag und Bekanntmachung des Hinweises auf die Entscheidung über den Einspruch: **09.04.2008**
(45) Hinweis auf die Patenterteilung: 08.09.2004
(21) Anmeldenummer: 01114181.9
(22) Anmeldetag: 12.06.2001
(51) Int. Cl.: A01F 12/40

(54) **Verteilvorrichtung für eine Zerkleinerungsvorrichtung**
Spreading device for chopper
Dispositif à répartir pour hacheur

(30) Priorität: 16.06.2000 DE 10029715
(43) Veröffentlichungstag der Anmeldung: 19.12.2001
(73) Patentinhaber: DEERE & COMPANY, Moline, Illinois 61265-8098 (US)
(72) Erfinder: Foth, Christoph, 17349 Ballin (DE)
(74) Vertreter: Holst, Sönke

(56) Entgegenhaltungen:
- EP-A- 0 537 621
- EP-A- 0 631 717
- EP-A- 0 685 151
- EP-A- 0 782 381
- EP-A- 0 993 764
- DE-A- 3 838 936
- DE-U- 8 014 119

## Beschreibung

Die Erfindung betrifft eine Verteilvorrichtung für eine Zerkleinerungsvorrichtung, mit wenigstens einem Leitblech zur transversalen Streuung der Erntegutreste, dessen Stellung durch einen Antrieb veränderbar ist.

Im Stand der Technik werden Verteilvorrichtungen mit gekrümmten Leitblechen verwendet, die dazu dienen, von einem an der Rückseite des Mähdreschers angebrachten Häcksler ausgeworfene Erntegutreste (Stroh) durch ihre Krümmung mehr oder weniger weit in seitliche Richtung abzulenken, um sie über die Schnittbreite des Mähdreschers auf dem Feld zu verteilen. Unter normalen, trockenen Bedingungen wird das gehäckselte Stroh nach dem Verlassen der Leitbleche durch den Luftwiderstand gebremst und etwas verwirbelt. Dadurch kommt das Stroh als gleichmäßige Schicht auf den Boden zu liegen. Bei sehr feuchtem oder grünem und schwerem Stroh kann der Luftwiderstand das gehäckselte Stroh nicht so stark verwirbeln. Das Stroh verlässt die Leitbleche strahlenförmig und wird gebündelt auf den Boden geworfen. Dabei entstehen deutlich sichtbare Streifen hinter dem Mähdrescher, die sich den einzelnen Strohleitblechen zuordnen lassen.

In der EP 0 685 151 A ist eine Verteilvorrichtung für Häcksler beschrieben, die mehrere, in einem Ablenkgehäuse angeordnete, motorisch verstellbare Leitbleche zur Führung des Häckselguts aufweist. Die Richtung der Leitbleche wird durch den Motor entsprechend der mit einem Sensor erfassten Windrichtung und -geschwindigkeit selbsttätig derart eingestellt, um die Strohhäcksel gleichmäßig über die Schnittbreite des Mähdreschers zu verteilen.
In der DE 41 34 136 A wird vorgeschlagen, die Leitbleche einer Verteilvorrichtung in Abhängigkeit von der Neigung des Felds, auf dem sich der Mähdrescher befindet, zu verschwenken.

Die bekannten Verstellvorrichtungen für die Leitbleche können das Problem der Schwadbildung bei feuchtem Erntegut aber nicht lösen.

Das der Erfindung zugrunde liegende Problem wird darin gesehen, eine Verteilvorrichtung bereitzustellen, die auch bei feuchtem Erntegut eine gleichmäßige Verteilung der Erntegutreste auf dem Erdboden ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, die Stellung der Leitbleche durch einen motorischen Antrieb fortdauernd zu verändern. Auf diese Weise werden die Erntegutreste nacheinander in immer verschiedene Richtungen abgelenkt, so dass bei hinreichend hoher Geschwindigkeit der Verstellung der Leitbleche auch bei feuchtem oder grünen Stroh eine gleichmäßige Verteilung der Erntegutreste auf dem Feld erzielt wird. Durch die verbesserte Verteilwirkung kann die Anzahl der Leitbleche reduziert werden, wodurch die Verstopfungsanfälligkeit vermindert und der Materialfluss verbessert ist. Die Erfindung kann auch an bereits vorhandenen Verteileinrichtungen nachgerüstet werden.

Vorzugsweise schwenkt der Antrieb das Leitblech um eine vertikale Achse hin und her, so dass die Richtung, in die die Erntegutreste abgelenkt werden, sich kontinuierlich ändert. Möglich wäre es auch, die Leitbleche an ihrem vorderen Ende fest einzuspannen, und sie mit dem Antrieb in variierende Richtungen hin- und herzubiegen. Man erspart sich dadurch eine Schwenklagerung, vergrößert aber die zum Schwenken aufzubringende Energie. Auch eine Verschiebung der Leitbleche in seitlicher Richtung ist denkbar.

Es bietet sich an, mehrere Leitbleche seitlich nebeneinander anzuordnen und mit dem Antrieb zu verbinden. Die Leitbleche können alle gleichphasig angetrieben werden, oder in zwei (oder mehrere) Gruppen unterteilt sein, die gegenphasig (oder mit unterschiedlichen Phasen) bewegt werden.

Zur Erzeugung der Hin- und Herbewegung der Leitbleche ist, falls ein eine Drehbewegung produzierender Antrieb Verwendung findet, eine Umsetzung der Drehbewegung des Antriebs in die Schwenk- bzw. Linearbewegung der Leitbleche erforderlich. Denkbar ist aber auch, einen Linearmotor, z. B. einen doppeltwirkenden bzw. gegen die Kraft einer Feder wirkenden Hydraulikzylinder, zu verwenden.

Die Umsetzung einer Dreh- in eine Linearbewegung kann durch ein vom Antrieb in Drehung versetztes Element erfolgen, an dem eine Pleuelstange angreift. Alternativ wäre es auch möglich, durch den Antrieb einen Exzenter anzutreiben, der ein anderes, mit den Leitblechen verbundenes Element verschiebt.

Das rotierende Element kann ein Loch aufweisen, in dem sich ein Stift befindet, der mit der Pleuelstange in Verbindung steht. Der Stift ist vorzugsweise in einem Langloch des Elements angeordnet, so dass durch Variieren der Position des Stifts im Langloch eine stufenlose Einstellung der Amplitude der Schwenkbewegung erfolgen kann. Denkbar wäre, anstelle des Langlochs mehrere, unterschiedlich weit von der Drehachse beabstandete Löcher im Element vorzusehen, in die der Stift wahlweise gesteckt werden kann. Dadurch ist eine Drehung des Stifts in den Löchern und eine drehfeste Verbindung zwischen Stift und Pleuelstange möglich. Bei einem Langloch ist der Stift hingegen in der Regel relativ zum Element drehfest angebracht, und die Pleuelstange dreht sich gegenüber dem Stift.

Jedes Leitblech kann separat mit dem Antrieb verbunden werden. Bevorzugt ist aber, mehrere Elemente antriebsmäßig durch eine Strebe miteinander zu verbinden, und die Strebe durch den Antrieb in eine Hin- und Herbewegung zu versetzen. Die Leitbleche sind vorzugsweise in unterschiedlichen Stellungen an der Strebe befestigbar, so dass ihr Arbeitswinkel wählbar ist. Zur lös- und verstellbaren Befestigung der Leitbleche an der Strebe können Verbindungselemente dienen, die an der Oberseite des Gehäuses der Verteilvorrichtung aufliegen, um die Schwenklagerung der Leitbleche zu entlasten.

Es wird vorgeschlagen, die Leitbleche insbesondere in ihren Endbereichen mit einem Diffusor auszustatten, der eine Verbesserung der Verteilwirkung erzielt. Derartige Diffusoren können durch Stahldrahtgrannen, Bleche oder Ausbuchtungen der Leitbleche realisiert werden.

Außerdem kann der von den Leitblechen überstrichene Winkelbereich in Abhängigkeit von der Windrichtung und/oder Bodenneigung variiert werden. Dazu kann ein zusätzlicher Antrieb vorgesehen sein, der mittels eines Sensors oder manuell gesteuert wird, und die Stellung eines Antriebs der Leitbleche verändert. Denkbar wäre auch, nur einen - eine Hin- und Herbewegung erzeugenden - Motor zum Schwenken der Leitbleche vorzusehen, dessen Bewegungsbereich entsprechend der Windrichtung und/oder der Bodenneigung gesteuert wird.

Die Erfindung findet insbesondere an Strohverteilern von Erntemaschinen, wie Mähdreschern, Verwendung.

In den Zeichnungen sind zwei nachfolgend näher beschriebene Ausführungsbeispiele der Erfindung schematisch dargestellt. Es zeigen:
- Fig. 1: eine Erntemaschine mit einer Zerkleinerungseinrichtung und einer Verteilvorrichtung für Erntegutreste;
- Fig. 2: eine rückseitige Ansicht der Verteilvorrichtung;
- Fig. 3: eine Draufsicht auf eine zweite Ausführungsform der Verteilvorrichtung; und
- Fig. 4: eine seitliche, vergrößerte Ansicht des in Figur 3 eingekreisten Bereichs B.

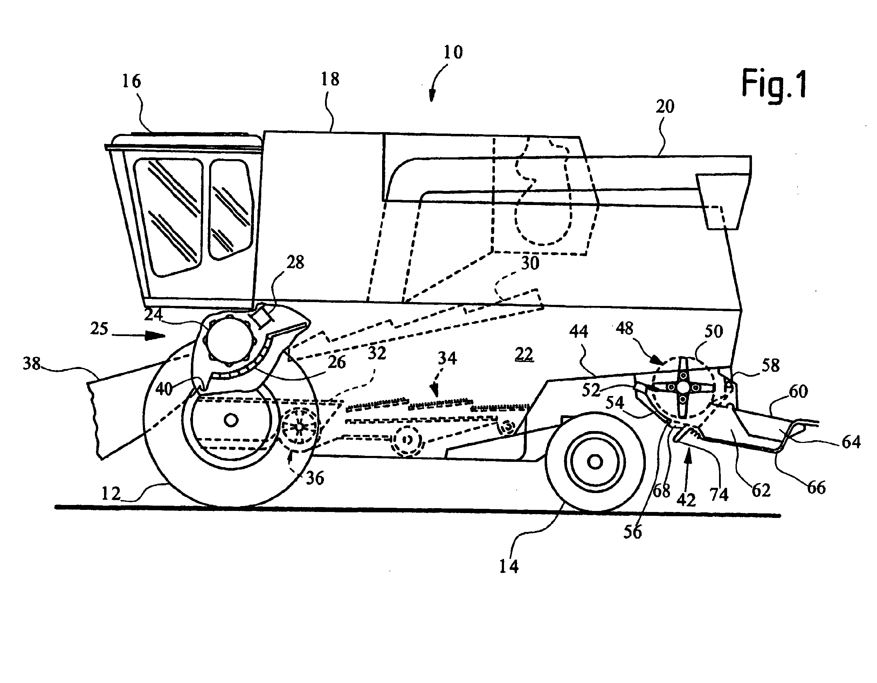

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 in eine Ausfallhaube 44 des Mähdreschers 10 gefördert werden und leichte Bestandteile mittels eines Gebläses 36 von den Sieben 34 auf den Erdboden geblasen werden. Auf dem Erdboden liegendes oder stehendes Erntegut wird über einen Schrägförderer 38 und eine Steinfangmulde 40 der Dreschtrommel 24 zugeführt, nachdem es von einer nicht gezeigten Erntegutbergungsvorrichtung vom Erdboden aufgenommen worden ist. Anstelle der Schüttler 30 können auch eine oder mehrere rotierende Abscheidetrommeln vorgesehen sein.

Am hinteren Ende der Ausfallhaube 44 ist eine Zerkleinerungsvorrichtung 42 vorgesehen, in die die von den Schüttlern 30 geförderten Reste des Ernteguts gelangen, wie z.B. Stroh. Die im folgenden als Fördergut bezeichnete Erntegutreste werden von einer schnell im Gegenuhrzeigersinn rotierenden Trommel 48 mit daran angebrachten Messern 50 erfasst. Auf der Trommel 48 sind gleichmäßig über den Umfang verteilt mehrere Messer 50 beweglich angeordnet. Das Fördergut wird von der Trommel 48 und den Messern 50 mitgenommen und an einer feststehenden Leiste mit Gegenmessern 52 vorbeigezogen.

Das Gehäuse der Zerkleinerungsvorrichtung 42 ist an der Unterseite der Ausfallhaube 44 befestigt und umschließt die Trommel 48. Der erste Bereich 54 des Gehäuses ist ortsfest an der Erntemaschine 10 angebracht. Das Fördergut wird anschließend durch die Trommel 50 an einem zweiten Bereich 68 des Gehäuses vorbeigeführt, der an einer ersten, zur Zeichenebene orthogonalen Achse 56 schwenkbar am Gehäuse angelenkt ist.

Am auslassseitigen Ende der Zerkleinerungsvorrichtung 42 ist eine Verteilvorrichtung 62 in Form eines so genannten Strohverteilers angeordnet. Die Verteilvorrichtung 62 weist ein um eine horizontale, senkrecht zur Zeichenebene verlaufende Achse 58, die im folgenden als zweite Achse bezeichnet wird, schwenkbares Bodenblech 60 auf, so dass die Neigung der gesamten Verteilvorrichtung 62 relativ zum Erdboden einstellbar ist. Unterhalb des Bodenblechs 60 ist eine Anzahl von Leitblechen 64 angeordnet. Die Leitbleche 64 sind längliche, sich senkrecht zum Bodenblech 60 nach unten erstreckende Bleche, die eine bezüglich der Fahrtrichtung der Erntemaschine 10 nach rechts oder nach links gerichtete Krümmung aufweisen. Die Verteilvorrichtung 62 kann - was in den Figuren nicht dargestellt ist - ein oben, unten und an den Seiten geschlossenes Gehäuse aufweisen, um die von der Trommel 48 erzeugte Windenergie nicht zu rasch abzubauen.

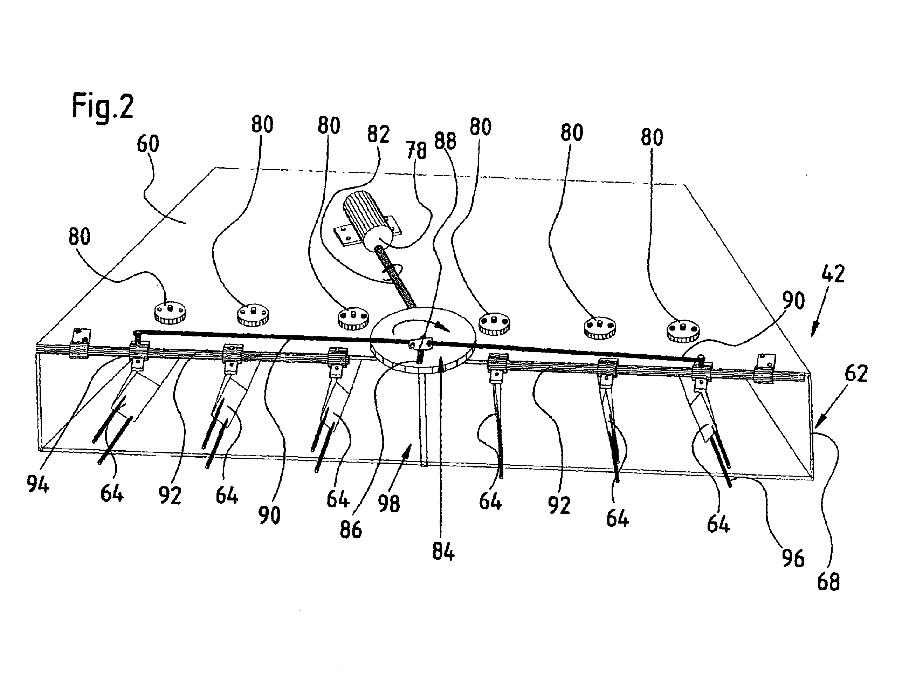

An einem seitlichen Ende (oder beiden Enden) des zweiten Bereichs 68 sind unterseitig Hebel 74 angebracht. Außerdem sind (in Vorwärts-Fahrtrichtung der Erntemaschine 10) hinter den Hebeln 74 mehrere Aussparungen an der Unterseite des zweiten Bereichs 68 vorgesehen. Jeweils eine dieser Aussparungen nimmt eine Querstange auf, die über eine Stange 66 mit dem Bodenblech der Verteilvorrichtung 62 verbunden ist. Mit der Auswahl der jeweils mit der Querstange in Eingriff gebrachten Aussparung wird die Neigung der Verteilvorrichtung 62 festgelegt. Gleichzeitig wird dabei die Neigung des zweiten Bereichs 68 des Gehäuses und damit die horizontale Auswurfrichtung des gehäckselten Förderguts an die Neigung der Verteilvorrichtung 62 angepasst.
Um eine gleichmäßige Verteilung der Erntegutreste auf dem Erdboden zu erreichen, werden die Leitbleche 64 durch einen Antrieb 78 (Figur 2) fortdauernd in seitlicher Richtung hinund hergeschwenkt. Die Leitbleche 64 sind an ihrem in Vorwärtsfahrtrichtung vorderen Ende um vertikale Achsen 80 drehbar am Bodenblech 60 angebracht. Die Achsen 80 können wahlweise in Fahrtrichtung nach vorn und hinten versetzt werden, da unterschiedliche Punkte zur Befestigung der Leitbleche 64 am Bodenblech 60 vorgesehen sind. Etwa auf halber Länge ist an der Oberseite jedes Leitblechs 64 ein klammerförmiges Verbindungselement 94 vorgesehen, welches das Leitblech 64 mit einer Strebe 92 verbindet. Die Verbindungselemente 94 liegen außerdem gleitend auf der Oberseite des Bodenblechs 60 auf, um die Schwenklagerung der Leitbleche 64 an den Achsen 80 zu entlasten. Jeweils eine Strebe 92 ist auf beiden Seiten einer vertikalen, das Gehäuse der Verteilvorrichtung 62 in zwei (linke und rechte) Hälften unterteilenden Mittelwand 98 angeordnet und verbindet die den jeweiligen Hälften der Verteilvorrichtung 62 zugeordneten Leitbleche 64 miteinander.

Die äußeren zwei Leitbleche 64 sind mit Verbindungselementen 94 verbunden, an der auch jeweils eine Pleuelstange 90 befestigt ist. Die Pleuelstangen 90 sind an ihrem anderen Ende drehbar an einem Stift 88 - beispielsweise durch einen den Stift 88 umschließenden, kugelgelagerten Ring - gelagert, der sich in einem Langloch 86 in einem drehbaren, scheibenförmigen Element 84 befindet. Denkbar wäre auch, die Pleuelstangen 90 drehfest am Stift 88 zu befestigen, und den Stift 88 drehbar am Element 84 zu lagern, was jedoch eine Verschiebung des Stifts 88 über die Länge des Langlochs 86 erschwert. Das drehbare Element 84 wird durch ein (in der Zeichnung nicht erkennbares) Winkelgetriebe in Drehung versetzt, welches durch einen Antrieb 78 über eine Welle 82 angetrieben wird.

Der Antrieb 78 ist ein Elektro- oder Hydraulikmotor mit verstellbarer Geschwindigkeit. Er versetzt über die Welle 82 und das Winkelgetriebe das Element 84 in Drehung, so dass der Stift 88 ebenfalls um die Drehachse des Elements 84 rotiert. Die mit dem Stift 88 gekoppelten Pleuelstangen 90 werden somit fortdauernd hin- und her gezogen, so dass sich die Verbindungselemente 94 der äußeren Leitbleche 64 und auch die Streben 92 kontinuierlich von links nach rechts und umgekehrt bewegen. Im Ergebnis werden die Leitbleche 64 kontinuierlich um die Achsen 80 hin- und hergeschwenkt.

Die Leitbleche 64 besitzen eine Krümmung, die in der Figur 2 wiedergegeben ist. Das gehäckselte Fördergut wird entsprechend der Krümmung in einer Kurvenbahn geführt. Das Fördergut verlässt die Leitbleche in tangentialer Richtung und wird so gegenüber der Fahrtrichtung der Erntemaschine 10 seitlich abgelenkt auf das Feld geworfen. Am Ende der Leitbleche 64 angebrachte Diffusoren 96 in Form von Stahldrahtgrannen verbessern die Verteilwirkung. Durch die kontinuierliche Schwenkbewegung der Leitbleche 64 wird das Fördergut sukzessive in jeweils eine andere Richtung abgelenkt, so dass bei hinreichend hoher Schwenkfrequenz auch bei feuchtem oder grünem und schwerem Stroh eine gleichmäßige Verteilung des Förderguts auf dem Erdboden erreicht wird. Eine unerwünschte Schwadbildung ist vermieden.

Das Langloch 86 ermöglicht, den Stift 88 in unterschiedlichen Abständen von der Drehachse des Elements 84 zu befestigen, was eine Einstellung der Amplitude der Schwenkbewegung der Leitbleche 64 ermöglicht. Die Schwenkfrequenz wird durch die Drehgeschwindigkeit des Antriebs 78 vorgegeben und ist vorzugsweise ebenfalls variabel. Die Leitbleche 64 können, wie in Figur 2 dargestellt, synchron arbeiten. Anzumerken ist, dass es auch denkbar ist, die Streben 92 links und rechts der Mittelwand 98 gegenphasig, also in jeweils gegenüberliegende Richtungen anzutreiben, was durch zwei Stifte 88, die einander diametral auf dem Element 84 gegenüberliegen erfolgen kann, die jeweils eine Pleuelstange 90 und eine Strebe 92 antreiben. Der Vorteil liegt darin, dass auch bei höheren Schwenkfrequenzen keine störenden Schwingungen der Verteilvorrichtung 62 zu befürchten sind.

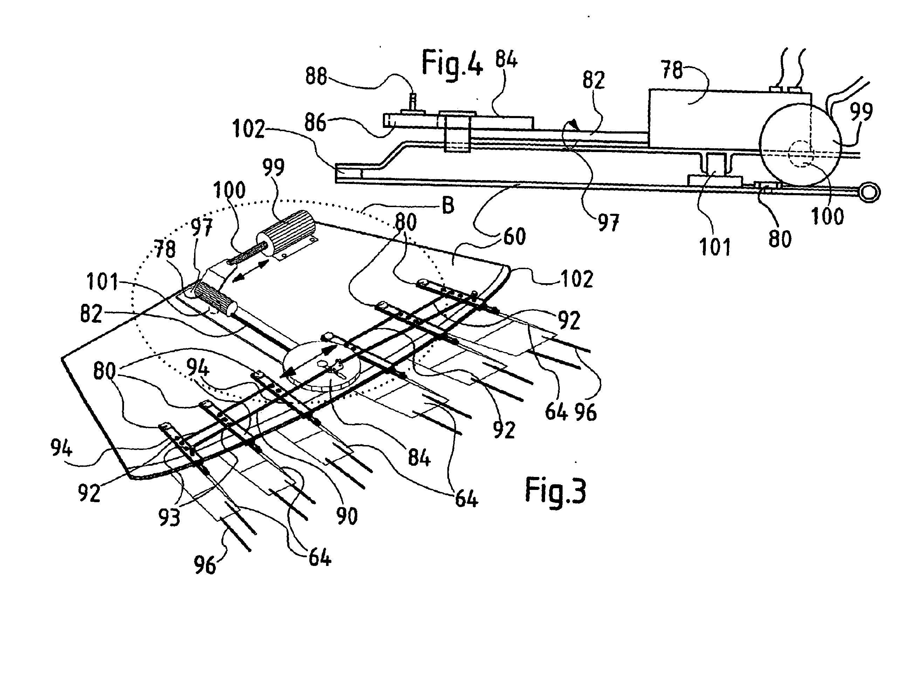

In Figur 3 ist eine zweite Ausführungsform einer erfindungsgemäßen Verteilvorrichtung dargestellt. Dabei sind die Elemente, die in der Figur 2 gezeigten Elementen entsprechen, mit übereinstimmenden Bezugszeichen gekennzeichnet. In dieser Ausführungsform können die Verbindungselemente 94 von den Streben 92 gelöst werden, so dass das jeweilige Leitblech 64 in einer wählbaren Stellung mit der Pleuelstange 90 gekoppelt werden kann. Dazu können die Streben 92 an den klammerförmigen Verbindungselementen 94, welche oberhalb des Bodenblechs 60 angeordnet und an den Achsen 80 drehbar gelagert sind, wahlweise an verschiedenen Stellen 93 befestigt (eingesteckt) werden. Dadurch ergeben sich für die einzelnen Leitbleche 64 unterschiedliche mögliche Schwenkwinkel und -amplituden, und somit unterschiedliche Verteilbreiten. Die klammerförmigen Verbindungselemente 94 ruhen auf Gleitschienen 102, die an der hinteren Kante der Oberseite des Bodenblechs 60 angebracht sind. Die Kraftübertragung von den Verbindungselementen 94 auf die Leitbleche 64 kann an den Achsen 80 und/oder hinter den Gleitschienen 102 erfolgen.

Um eine dem Seitenwind bzw. der Bodenneigung angepasste Steuerung der Leitbleche 64 und dadurch eine entsprechende Verteilung des Förderguts zu ermöglichen, ist in der Ausführungsform gemäß Figur 3 und 4 das rotierende scheibenförmige Element 84 einschließlich des Antriebs 78 und der Welle 82 auf einer Konsole 97 befestigt, welche an einer Drehachse 101 schwenkbar am Bodenblech 60 gelagert ist. Die Konsole 97 ist als zweiarmiger Hebel ausgeführt. Am ersten Hebel ist das Element 84 montiert, am zweiten Hebel eine Öse mit einem Verbindungsteil 100 für einen Verstellmotor 99. Der Verstellmotor 99 wird durch elektrische Energie (bzw. hydraulisch oder pneumatisch) angetrieben und entweder manuell oder mittels eines Windrichtungs- und/oder Bodenneigungssensors entsprechend der Windrichtung bzw. der Bodenneigung gesteuert. Er kann als Spindelmotor ausgeführt sein und bewirkt eine seitliche Verschiebung des Verbindungsteils 100. Durch die Verschiebung des Verbindungsteils 100 wird die Position des rotierenden scheibenförmigen Elements 84 auf dem ersten Hebel der Konsole 97 in Fahrtrichtung nach links oder rechts geändert, wodurch trotz oszillierender Leitbleche 64 das Auswerfen des Häckselguts den Seitenwind- bzw. Bodenneigungsverhältnissen angepasst wird.

## Patentansprüche

1. Mähdrescher (10) mit einer Zerkleinerungsvorrichtung für Erntegutreste und einer stromab der Zerkleinerungsvorrichtung angeordneten Verteilvorrichtung (62) zum Verteilen der zerkleinerten Erntegutreste auf dem Erdboden, die ein Bodenblech (60) und mehrere seitlich nebeneinander angeordnete Leitbleche (64) zur transversalen Streuung der Erntegutreste umfasst, die sich unterhalb des Bodenblechs (60) nach unten erstrecken und mit einem Antrieb (78) verbunden sind, durch den sie gegenüber dem Bodenblech (60) um eine vertikale Achse (80) schwenkbar sind, **dadurch gekennzeichnet, dass** der Antrieb (78) die Leitbleche (64) kontinuierlich bewegt.

2. Mähdrescher (10) nach Anspruch 1, **dadurch gekennzeichnet, dass** das Leitblech (64) durch ein vom Antrieb (78) in Drehung versetztes Element (84) in Bewegung versetzt wird.

3. Mähdrescher (10) nach Anspruch 2, **dadurch gekennzeichnet, dass** das Leitblech (64) über eine Pleuelstange (90) mit einem Stift (88) verbunden ist, der in ein Loch des Elements (84) eingreift.

4. Mähdrescher (10) nach Anspruch 3, **dadurch gekennzeichnet, dass** das Loch des Elements (84) ein Langloch (86) ist, und das der Stift (88) im Langloch (88) in unterschiedlichen Stellungen arretierbar ist.

5. Mähdrescher (10) nach einem der Ansprüche 1 bis 4, **dadurch gekennzeichnet, dass** mehrere Leitbleche (64) direkt oder indirekt durch eine Strebe (92) mit dem Antrieb (78) verbunden sind, und dass die Leitbleche (64) verstellbar an der Strebe (92) fixierbar sind.

6. Mähdrescher (10) nach Anspruch 5, **dadurch gekennzeichnet, dass** das Leitblech (64) durch ein Verbindungselement (94) mit der Strebe (92) verbunden ist, das auf der Oberseite eines Gehäuses der Verteilvorrichtung (62) gleitend aufliegt.

7. Mähdrescher (10) nach einem der vorhergehenden Ansprüche, **dadurch gekennzeichnet, dass** das Leitblech (64) mit einem Diffusor (96) versehen ist.

8. Mähdrescher (10) nach einem der vorhergehenden Ansprüche, **dadurch gekennzeichnet, dass** die Stellung der Leitbleche (64) abhängig von der Windrichtung und/oder der Bodenneigung variabel ist.

## Claims

1. Combine harvester (10) with a chopper for crop residues and a spreading device (62), which is arranged downstream of the chopper, for spreading the chopped crop residues over the ground, the spreading device comprising a bottom plate (60) and a plurality of guide plates (64) arranged laterally next to one another for the transverse scattering of the crop residues, said guide plates extending downwards below the bottom plate (60) and being connected to a drive (78) by means of which they can be pivoted about a vertical axis (80) in relation to the bottom plate (60), **characterized in that** the drive (78) continuously moves the guide plates (64).

2. Combine harvester (10) according to Claim 1, **characterized in that** the guide plate (64) is set into movement by an element (84) which is set into rotation by the drive (78).

3. Combine harvester (10) according to Claim 2, **characterized in that** the guide plate (64) is connected via a connecting rod (90) to a pin (88) which engages in a hole in the element (84).

4. Combine harvester (10) according to Claim 3, **characterized in that** the hole in the element (84) is an elongated hole (86), and **in that** the pin (88) can be locked in different positions in the elongated hole (88) .

5. Combine harvester (10) according to one of Claims 1 to 4, **characterized in that** a plurality of guide plates (64) are connected to the drive (78) directly or indirectly by a strut (92), and **in that** the guide plates (64) can be fixed in an adjustable manner on the strut (92).

6. Combine harvester (10) according to Claim 5, **characterized in that** the guide plate (64) is connected to the strut (92) by a connecting element (94) which rests in a sliding manner on the upper side of a housing of the spreading device (62).

7. Combine harvester (10) according to one of the preceding claims, **characterized in that** the guide plate (64) is provided with a diffuser (96).

8. Combine harvester (10) according to one of the preceding claims, **characterized in that** the position of the guide plates (64) is variable as a function of the wind direction and/or the inclination of the ground.

## Revendications

1. Moissonneuse-batteuse (10) avec un dispositif de déchiquetage pour restes de récolte et un dispositif de répartition (62) disposé en aval du dispositif de déchiquetage pour la répartition des restes de récolte déchiquetés sur le sol, qui comprend une tôle de plancher (60) et plusieurs tôles de guidage (64) disposées latéralement l'une à côté de l'autre pour la dispersion transversale des restes de récolte, lesquelles s'étendent vers le bas en dessous de la tôle de plancher (60) et sont reliées à un entraînement (78), via lequel elles peuvent pivoter par rapport à la tôle de plancher (60) autour d'un axe vertical (80), **caractérisée en ce que** l'entraînement (78) met les tôles de guidage (64) en permanence en mouvement.

2. Moissonneuse-batteuse (10) suivant la revendication 1, **caractérisée en ce que** la tôle de guidage (64) est mise en mouvement par un élément (84) mis en rotation par l'entraînement (78).

3. Moissonneuse-batteuse (10) suivant la revendication 2, **caractérisée en ce que** la tôle de guidage (64) est reliée par une bielle (90) avec une broche (88) qui fait prise dans un trou de l'élément (84).

4. Moissonneuse-batteuse (10) suivant la revendication 3, **caractérisée en ce que** le trou de l'élément (84) est un trou oblong (86) et **en ce que** la broche (88) peut être verrouillée dans différentes positions dans le trou oblong (88).

5. Moissonneuse-batteuse (10) suivant l'une des revendications 1 à 4, **caractérisée en ce que** plusieurs tôles de guidage (64) sont reliées directement ou indirectement par une entretoise (92) à l'entraînement (78) et **en ce que** les tôles de guidage (64) sont fixées de manière réglable à l'entretoise (92).

6. Moissonneuse-batteuse (10) suivant la revendication 5, **caractérisée en ce que** la tôle de guidage (64) est reliée à l'entretoise (92) par un élément de liaison (94) qui repose à glissement sur la face supérieure d'un boîtier du dispositif de répartition (62).

7. Moissonneuse-batteuse (10) suivant l'une des revendications précédentes, **caractérisée en ce que** la tôle de guidage (64) est pourvue d'un diffuseur (96).

8. Moissonneuse-batteuse (10) suivant l'une des revendications précédentes, **caractérisée en ce que** la position des tôles de guidage (64) est variable en fonction de la direction du vent et/ou de l'inclinaison du sol.
